# EUROPÄISCHE PATENTANMELDUNG

(11) **EP 0 762 770 A2**
(43) Veröffentlichungstag der Anmeldung: **12.03.1997**
(21) Anmeldenummer: 96112991.3
(22) Anmeldetag: 13.08.1996
(51) Int. Cl.: H04N 7/26

(54) **Vorrichtung zur Speicherung von Videobilddaten**

(30) Priorität: 29.08.1995 DE 19531847
(71) Anmelder: Alcatel SEL Aktiengesellschaft, D-70435 Stuttgart (DE); ALCATEL N.V., NL-2288 BH Rijswijk (NL)
(72) Erfinder: Müller, Detlef, 71272 Renningen (DE)
(74) Vertreter: Schätzle, Albin, Dipl.-Phys.

(57) **Zusammenfassung**

In einem Video-Server (SER) wird zur Datenreduktion eine Kompression von Videobilddaten eines Videofilms durch Kodierung (K1) nach dem Interframe-Verfahren durchgeführt. Zusätzlich werden Videobilddaten vorbestimmter einzelner Videobilder nach dem Intraframe-Verfahren kodiert (K2) und als Einsprungstellen parallel zu den entsprechenden interframe-kodierten Videobilddaten abgespeichert (MEMO). Bei der Übertragung des Videofilms werden lediglich die interframe-kodierten Videobilddaten übertragen. Erst bei Anforderung eines schnellen Bildvorlaufs oder eines schnellen Bildrücklaufs werden die Videobilddaten der Einsprungsstelle intraframe-kodiert und alle nachfolgenden Videobilder interframe-kodiert übertragen.

## Beschreibung

Die Erfindung betrifft eine Vorrichtung zur Speicherung von Videobilddaten nach dem Oberbegriff des Patentanspruchs 1, ein Verfahren zur Speicherung von Videobilddaten, sowie ein Verfahren zum Übertragen von Videobilddaten.

In Video-auf-Anfrage Systemen, sogenannten Video-on-demand Systemen werden Videobilddaten in einem Video-Server kodiert und gespeichert und auf Anfrage eines Kunden über ein Breitbandkabelverteilnetz zum Kunden übertragen. Die Bildinformation der Videobilddaten ist in Videobilder gegliedert, die aneinandergereiht einen Videofilm ergeben.

Aufgrund der beschränkten Übertragungskapazität der Breitbandkabel und vor allem der Kabel im Anschlußnetz wird zur Datenratenreduktion im Video-Server eine Kompression der Videobilddaten durch Kodierung nach dem Interframe-Verfahren durchgeführt. Dazu werden nicht die Videobilddaten der Originalvideobilder, sondern lediglich die Differenz der Videobilddaten aufeinanderfolgender Videobilder kodiert und gespeichert. Ein Nachteil bei der Übertragung interframe-kodierter Videobilddaten ist, daß sie weder vor- noch zurückgespult werden können, da zur Erstellung des aktuellen Videobildes stets die Bildinformation des vorhergehenden Videobildes benötigt wird.

Aus DE 38 31 277 A1 ist bekannt, daß in dem interframe-kodierten Videobilddatenstrom von Zeit zu Zeit intraframe-kodierte Videobilddaten eingefügt und abgespeichert werden. Die Intraframe-Kodierung nutzt die Korrelation der Videobilddaten innerhalb eines Videobildes aus. Die Datenrate von intraframe-kodierten Videobilddaten ist wesentlich höher als die Datenrate von interframe-kodierten Videobilddaten. Ein schneller Bildvorlauf oder Bildrücklauf erfolgt über das separate Auslesen und Übertragen der im interframe-kodierten Videobilddatenstrom eingefügten intraframe-kodierten Videobilddaten. Ein Nachteil dieses Verfahrens ist, daß beim Übertragen eines Videofilms eine erhöhte Übertragungskapazität benötigt wird.

Es ist deshalb Aufgabe der Erfindung, eine Vorrichtung und Verfahren zur Verfügung zu stellen, mittels derer Videobilddaten weniger aufwendig gespeichert und übertragen werden können.

Diese Aufgabe wird durch die Lehre der Patentansprüche 1, 5 und 6 gelöst. Vorteilhafte Ausgestaltungen sind den abhängigen Patentansprüchen 2 bis 4 und 7 bis 8 zu entnehmen.

Ein besonderer Vorteil der Erfindung ist, daß Video-on-demand Dienste mit schnellem Bildvorlauf und schnellem Rücklauf über ein diensteintegrierendes digitales Netz ermöglicht werden.

Im folgenden wird die Erfindung anhand zweier Ausführungsbeispiele unter Zuhilfenahme der Figuren 1 bis 3 erläutert. Es zeigen:
- Fig. 1: eine schematische Darstellung eines ersten Ausführungsbeispiels eines erfindungsgemäßen Video-Servers,
- Fig. 2: eine schematische Darstellung eines zweiten Ausführungsbeispiels einer erfindungsgemäßen Vorrichtung zur Speicherung von Videobilddaten, und
- Fig. 3: einen schematisch dargestellten Aufbau eines Speichers der erfindungsgemäßen Vorrichtung.

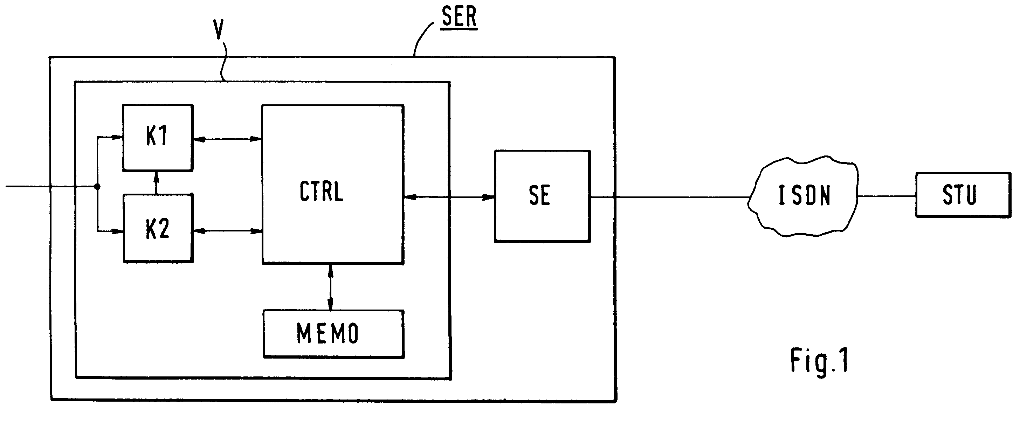

Ein erstes Ausführungsbeispiel der Erfindung wird nun anhand der Fig. 1 beschrieben. Fig. 1 zeigt einen erfindungsgemäßen Video-Server in Verbindung mit einem diensteintegrierenden digitalen Netz und einer Set-Top-Box.

Der Video-Server SER ist im Ausführungsbeispiel der Server einer Video-on-demand Zentrale, in der Videofilme, z.B. über Satellit ausgestrahlte Fernsehsendungen, empfangen, kodiert und in Datenbanken gespeichert werden und von der aus auf Anfrage von Kunden spezielle Videofilme in Form von Videobilddaten über das diensteintegrierende digitale Netz ISDN zur Set-Top-Box STU eines Kunden übertragen werden.

In der Set-Top-Box STU findet eine Dekodierung und ggf. eine Entschlüsselung der empfangenen Videobilddaten statt. Über die Set-Top-Box STU erfolgt auch die Anfrage nach Videofilmen. Die Set-Top-Box STU ist z.B. mit dem Fernsehgerät des Kunden verbunden, auf den die empfangenen Videobilddaten dargestellt werden.

Der Video-Server SER beinhaltet eine Sende-Empfangseinheit SE und eine Vorrichtung V zur Speicherung von Videobilddaten mit einem Kodierer K1, einem Kodierer K2, einer Steuereinheit CTRL und einem Speicher MEMO.

Die Steuereinheit CTRL beinhaltet z.B. einen Mikroprozessor. Sie ist mit dem Kodierer K1, dem Kodierer K2, dem Speicher MEMO und der Sende-Empfangseinheit SE verbunden, mit denen sie bidirektional Daten austauschen kann und die von ihr gesteuert werden.

Im Kodierer K1 werden Videobilddaten nach dem Interframe-Verfahren kodiert. Beim Interframe-Verfahren wird die Korrelation zwischen zeitlich aufeinanderfolgenden Videofilmen ausgenutzt. Der Kodierer K1 wird durch die Steuereinheit CTRL angesteuert. Er empfängt Videobilddaten von z.B. über Satellit ausgestrahlten Fernsehsendungen, kodiert diese nach dem Interframe-Verfahren und überträgt sie anschließend zur Steuereinheit CTRL. Ein entsprechender Kodierer ist z.B. aus DE 36 13 343 A1 bekannt.

Im Kodierer K2 werden Videobilddaten nach dem Intraframe-Verfahren kodiert. Beim Intraframe-Verfahren wird die Korrelation der Videobilddaten innerhalb eines Videobildes ausgenutzt. Ein entsprechender Kodierer ist z.B. aus DE 36 13 343 A1 bekannt. Die zu erzielende Kompression der Datenrate ist beim Intraframe-Verfahren geringer als beim Interframe-Verfahren. Der Kodierer K2 wird durch die Steuereinheit angesteuert. Er empfängt die gleichen Videobilddaten wie der Kodierer K1. Gesteuert durch die Steuereinheit CTRL kodiert der Kodierer K2 Videobilddaten einzelner vorbestimmte Videobilder und überträgt diese zur Steuereinheit CTRL. Eines dieser vorbestimmten Videobilder ist das Anfangsvideobild des empfangenen Videofilms, das zusätzlich zum Kodierer K1 übertragen wird, damit dieser das Interframe Verfahren starten kann.

Der Speicher MEMO ist ein voll adressierbarer Speicher, z.B. eine Magnetplatte, ein Magnetband, eine Compact-Disc-Read-Only-Memory, eine sog. CD-ROM oder die Festplatte einer Datenbank.

Die Sende-Empfangseinheit SE beinhaltet eine Protokollaufbereitungseinheit, in der das Protokoll des diensteintegrierenden digitalen Netzes ISDN an das Protokoll der Steuereinheit CTRL angepaßt wird um umgekehrt. Ferner beinhaltet sie einen Verstärker zum Verstärken der Signale der Steuereinheit CTRL und ggf. eine Verschlüsselungseinheit zum Verschlüsseln der Videofilme.

Das diensteintegrierende digitale Netz ISDN ist das sog. integrated services digital network. In der Basisanschlußkonfiguration werden einem Kunden zwei B-Kanäle mit 64 kbit/s und ein D-Kanal mit 16 kbit/s zur Verfügung gestellt. Einer oder beide B-Kanäle dienen dem Empfang der vom Video-Server SER übertragenen Videobilddaten, über den D-Kanal und/oder einen B-Kanal erfolgt die Anfrage nach Videofilmen beim Video-Server, sowie die Anforderung nach einem schnellen Bildvorlauf oder Bildrücklauf.

Im folgenden wird der Vorgang der Speicherung eines Videofilms beschrieben. Empfängt die Vorrichtung V z.B. über eine nicht dargestellte Satellitenantenne mit zugehörigem Empfangsteil oder über einen nicht dargestellten Videorekorder einen Videofilm mit unkomprimierten Videobilddaten, so wird das Anfangsvideobild im Kodierer K2 intraframe-kodiert und anschließend sowohl zum Kodierer K1 als auch zur Steuereinheit CTRL übertragen. Durch die Steuereinheit CTRL wird ein freier Speicherbereich im Speicher MEMO ausgewählt und die intraframe-kodierten Videobilddaten des Anfangsvideobildes an die Startadresse des ausgewählten Speicherbereichs geschrieben. Zusätzlich wird durch die Steuereinheit CTRL eine Sprungadresse vergeben, die mit abgespeichert wird. Die Sprungadresse zeigt an bei welcher Adresse sich die Videobilddaten des nachfolgenden Videobildes befindet. Dies ist z.B. die Leseadresse mit dem um Eins erhöhten Wert der Startadresse. Die Videobilddaten aller dem Anfangsvideobild nachfolgenden Videobilder werden im Kodierer K1 interframe-kodiert und jeweils mit einer Leseadresse und einer Sprungadresse im Speicher MEMO abgespeichert.

Videobilddaten vorbestimmter einzelner Videobilder, z.B. jedes zwanzigste Videobild oder alle Videobilder an denen ein Szenenwechsel erfolgt werden unabhängig von der Interframe-Kodierung zusätzlich, gesteuert durch die Steuereinheit CTRL, im Kodierer K2 intraframe-kodiert. Die intraframe-kodierten Videobilddaten werden parallel zu den entsprechenden interframe-kodierten Videobilddaten im Speicher MEMO abgespeichert. Die intraframe-kodierten Videobilddaten und die interframe-kodierten Videobilddaten der vorbestimmten einzelnen Videobilder erhalten unterschiedliche Leseadressen und gleiche Sprungadressen, so daß die intraframe-kodierten Videobilddaten als Einsprungsstellen beim schnellen Bildvorlauf und schnellem Bildrücklauf verwendet werden können.

Im folgenden wird der Vorgang der Übertragung eines Videofilms beschrieben. Über den D-Kanal und/oder einen B-Kanal wird vom Kunden ein Videofilm vom Video-Server SER angefordert. Gesteuert durch die Steuereinheit CTRL wird der angeforderte Videofilm aus dem Speicher MEMO ausgelesen und über einen oder beide B-Kanäle zum Kunden übertragen, in dem beginnend mit der Startadresse die Videobilddaten des Anfangsvideobildes ausgelesen und übertragen werden und anschließend alle nachfolgenden Videobilddaten, deren Abfolge durch die Sprungadressen und den darin gespeicherten nachfolgenden Leseadressen vorgegeben ist, sequentiell übertragen. Ist die Endadresse erreicht wird die Übertragung gestoppt.

Fordert der Kunde nun über den D-Kanal und/oder einen B-Kanal während der Übertragung des Videofilms einen schnellen Vorlauf an, so wird gesteuert durch die Steuereinheit CTRL nach dem nächsten vollständig übertragenen Videobild die Übertragung des Videofilms an einer Einsprungstelle fortgesetzt. Die Auswahl der Einsprungstelle erfolgt über eine Adressenliste, in der alle Leseadressen der intraframe-kodierten Videobilddaten gespeichert sind. Ausgehend vom aktuellen Stand der Leseadresse der interframe-kodierten Videobilddaten wird die Einsprungleseadresse der intraframe-kodierten Videobilddaten über einen Zähler nach dem angeforderten Vorlaufwert ausgewählt. Nach Übertragen der Videobilddaten der Einsprungstelle werden die nachfolgenden interframe-kodierten Videobilddaten beginnend mit der in der Sprungadresse der Einsprungstelle gespeicherten Leseadresse übertragen.

Entsprechendes gilt für die Anforderung eines schnellen Rücklaufs. Beim Kunden ist die Set-Top-Box STU z.B. mit einem Bildtelefon verbunden. Über das Bildtelefon können dann z.B. Videokonferenzen und Video-on-demand Anwendungen durchgeführt werden. Um einen Videofilm anzufordern wählt der Kunde die Rufnummer eines Videoservers, woraufhin eine Wählverbindung aufgebaut wird und aus dem zum Bildschirm des Bildtelefons übertragenen Menues an Videofilmen einen über eine Auswahlnummer über die Tastatur des Bildtelefons aus. Die Set-Top-Box STU kann auch im Bildtelefon integriert sein.

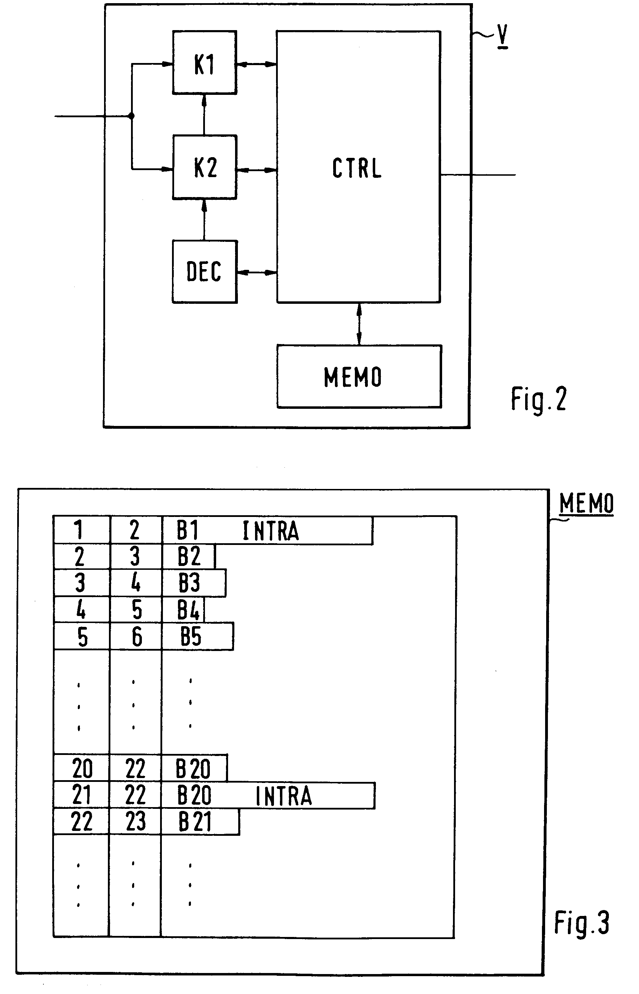

Ein zweites Ausführungsbeispiel wird nun anhand der Fig. 2 beschrieben. Fig. 2 zeigt eine erfindungsgemäße Vorrichtung zur Speicherung von Videobilddaten.

Die Vorrichtung V beinhaltet einen Kodierer K1, einen Kodierer K2, eine Steuereinheit CTRL, einen Speicher MEMO und einen Dekoder DEC. Die Vorrichtung V entspricht vom Aufbau und der Verbindung der Elemente der Vorrichtung V aus Fig. 1 mit folgender Ausnahme: Die Vorrichtung V hat zusätzlich einen Dekodierer DEC, der von der Steuereinheit CTRL angesteuert wird und dessen Ausgang mit dem Kodierer K2 verbunden ist.

Im Dekodierer DEC werden interframe-kodierte Videobilddaten dekodiert. Solch ein Dekoder ist z.B. auch in einer Set-Top-Box vorhanden.

Die Vorrichtung V befindet sich z.B. bei einer Fernsehanstalt oder einem Diensteanbieter. Unkomprimierte Videobilddaten aktueller Fernsehsendungen oder unkomprimierter Videofilme werden in der Vorrichtung interframe- und intraframe-kodiert und wie zu Fig. 1 beschrieben auf z.B. Magnetbänder oder CD-ROMs abgespeichert. Die CD-ROMs können dann einem Video-Server oder direkt an Kunden verkauft werden.

Die Kodierung und Abspeicherung der Videobilddaten erfolgt wie zu Fig. 1 beschrieben mit folgender Ausnahme: Die Videobilddaten der vorbestimmten Videobilder, die intraframe-kodiert werden sollen, werden nicht direkt aus den empfangenen Videobilddaten erzeugt, sondern aus den entsprechenden interframe-kodierten Videobilddaten, die dem Dekodierer DEC zugeführt werden, in dem sie dekodiert und anschließend dem Kodierer K2 zugeführt werden. Der Umweg über den Dekodierer DEC bringt den Vorteil, daß die bei der interframe-Kodierung im Kodierer K1 entstehenden Fehler mitberücksichtigt werden und die intraframe-kodierten Videobilddaten damit besser auf die interframe-kodierten Videobilddaten abgestimmt sind, wodurch sich bei den Einsprungstellen die beiderseitige Anpassung leichter vollziehen läßt.

Fig. 3 zeigt nun einen Speicher, der sowohl in dem zu Fig. 1 beschriebenen Video-Server als auch in der zu Fig. 2 beschriebenen Vorrichtung verwendet werden kann.

Der Speicher MEMO ist ein volladressierbarer Speicher. Ein Videofilm wird in einem Bereich des Speichers MEMO folgendermaßen abgespeichert: Bei der Startadresse 1 werden die Sprungadresse 2 und die intra-kodierten Videobilddaten des Anfangsvideobildes abgespeichert. An der Leseadresse 2 werden die Sprungadresse 3 und die interframe-kodierten Videobilddaten des dem Anfangsvideobildes folgenden, also des zweiten Videobildes abgespeichert. An der Leseadresse 3 werden die Sprungadresse 4 und die interframe-kodierten Videobilddaten des dritten Videobildes abgespeichert. Sollen alle zwanzig Videobilder zusätzlich intraframe-kodierte Videobilddaten erzeugt und abgespeichert werden, so erfolgt dies folgendermaßen: Bei der Leseadresse 20 werden die Sprungadresse 22 und die interframe-kodierten Videobilddaten des zwanzigsten Videobildes abgespeichert. Bei der Leseadresse 21 werden die Sprungadresse 22 und die intraframe-kodierten Videobilddaten des zwanzigsten Videobildes abgespeichert. Bei der Leseadresse 22 werden die Sprungadresse 23 und die interframe-kodierten Videobilddaten des einundzwanzigsten Videobildes abgespeichert.

Bei beiden Ausführungsbeispielen wird das Anfangsvideobild eines Videofilms intraframe-kodiert. Anstelle der Intraframe-Kodierung kann auch eine Interframe-Kodierung mit einem z.B. ganz weißen, ganz schwarzen oder einen Studiobild als Referenzbild durchgeführt werden. Damit kann eine Entkopplung der beiden Kodierer erreicht werden. Dies ist besonders beim zweiten Ausführungsbeispiel vorteilhaft, da dadurch zunächst die Interframe-Kodierung und in einem zweiten, z.B. örtlich und/oder zeitlich getrennten Schritt die Intraframe-Kodierung der vorbestimmten einzelnen Videobilder durchgeführt werden kann. Die intraframe-kodierten Videobilder werden dann in einem Sonderadressenbereich mit den entsprechenden Sprungadressen abgespeichert. Eine weitere Möglichkeit die beiden Kodierer zu entkoppeln besteht darin, den interframe-Kodierer derart auszustatten, daß er auch intraframe-kodieren kann.

Im ersten Ausführungsbeispiel wird zur Übertragung der Videofilme das diensteintegrierende digitale Netz ISDN verwendet. Anstelle des ISDN kann z.B. auch das Breitband-ISDN, ein Funknetz oder ein Kabelfernsehverteilnetz verwendet werden. Über das Kabelfernsehverteilnetz, das z.B. aus optischen Glasfasern, hybrid oder aus Koaxialleitungen aufgebaut ist, werden die Videofilme von einem Server zu z.B. Fernsehgeräten oder Computern übertragen.

Beim ersten Ausführungsbeispiel werden die Videofilme, wenn keine Anforderung nach einem schnellen Vorlauf oder einem schnellen Rücklauf besteht, ausschließlich interframe-kodiert übertragen. Zur Erhöhung der Störsicherheit können auch in größeren regelmäßigen Abständen, z.B. alle 100 Bilder intraframe-kodierte Videobilddaten in den sequentiellen Videobilddatenstrom eingefügt werden.

## Patentansprüche

1. Vorrichtung (V) zur Speicherung von Videobilddaten, deren Bildinformation in Videobilder gegliedert ist,
mit einem ersten Kodierer (K1) zum Kodieren von Videobilddaten nach dem Interframe-Verfahren, mit einem zweiten Kodierer (K2) zum Kodieren von Videobilddaten nach dem Intraframe-Verfahren und mit einem Speicher (MEMO), **dadurch gekennzeichnet,** daß die Vorrichtung (V) eine Steuereinheit (CTRL) zur Steuerung der beiden Kodierer (K1, K2) und zum Beschreiben des Speichers (MEMO) beinhaltet, die derart ausgelegt ist, daß gesteuert durch die Steuereinheit (CTRL) für vorbestimmte einzelne Videobilder sowohl interframe-kodierte Videobilddaten als auch intraframe-kodierte Videobilddaten erzeugbar und im Speicher (MEMO) abspeicherbar sind.

2. Vorrichtung (V) nach Anspruch 1, dadurch gekennzeichnet, daß die Vorrichtung einen Dekodierer (DEC) zum Dekodieren von interframe-kodierten Videobilddaten beinhaltet, und daß die interframe-kodierten Videobilddaten der vorbestimmten einzelnen Videobilder über den Dekodierer (DEC) dem zweiten Kodierer (K2) zur Intraframe-Kodierung zuführbar sind.

3. Vorrichtung (V) nach Anspruch 1, dadurch gekennzeichnet, daß die interframe-kodierten und die intraframe-kodierten Videobilddaten der vorbestimmten einzelnen Videobilder mit unterschiedlichen Leseadressen und mit gleichen Sprungadressen im Speicher (MEMO) abspeicherbar sind.

4. Vorrichtung (V) nach Anspruch 1, gekennzeichnet durch ihre Verwendung in einem Video-Server (SER).

5. Verfahren zur Speicherung von Videobilddaten, deren Bildinformation in Videobilder gegliedert ist,
bei dem die Videobilddaten nach dem Interframe-Verfahren kodiert und abgespeichert werden,
**dadurch gekennzeichnet,**
daß die Videobilddaten einzelner vorbestimmter Videobilder unabhängig von der Interframe-Kodierung zusätzlich nach dem Intraframe-Verfahren kodiert werden und als Einsprungstellen parallel zu den entsprechenden interframe-kodierten Videobilddaten abgespeichert werden.

6. Verfahren zum Übertragen von Videobilddaten, deren Bildinformation in Videobilder gegliedert ist,
bei dem nach dem Interframe-Verfahren kodierte Videobilddaten sequentiell übertragen werden,
**dadurch gekennzeichnet,**
daß auf Anforderung eines schnellen Bildvorlaufs oder eines schnellen Bildrücklaufs an einer Einsprungstelle anstelle der interframe-kodierten Videobilddaten zunächst die nach dem Intraframe-Verfahren kodierten Videobilddaten eines Videobildes und anschließend die nachfolgenden interframe-kodierten Videobilddaten übertragen werden.

7. Verfahren nach Anspruch 6, dadurch gekennzeichnet, daß in regelmäßigen Abständen intraframe-kodierte Videobilddaten in den sequentiellen Videobilddatenstrom eingefügt werden.

8. Verfahren nach Anspruch 6, dadurch gekennzeichnet, daß die Videobilddaten über ein diensteintegrierendes digitales Netz (ISDN) zu einem Bildtelefon übertragen werden.
